# EUROPÄISCHE PATENTSCHRIFT

(11) **EP 0 958 389 B1**
(45) Veröffentlichungstag und Bekanntmachung des Hinweises auf die Patenterteilung: **07.11.2001**
(21) Anmeldenummer: 97923975.3
(22) Anmeldetag: 22.05.1997
(51) Int. Cl.: C21D 9/04, B23K 35/00, E01B 7/10

(54) **VERFAHREN ZUR HERSTELLUNG EINES GLEISOBERBAUTEILS SOWIE GLEISOBERBAUTEIL**
PROCESS FOR PRODUCING A PERMANENT WAY COMPONENT AND SUCH A COMPONENT
PROCEDE DE PRODUCTION D'UNE SUPERSTRUCTURE DE VOIE FERREE ET SUPERSTRUCTURE DE VOIE FERREE

(30) Priorität: 24.05.1996 DE 19621017
(43) Veröffentlichungstag der Anmeldung: 24.11.1999
(73) Patentinhaber: BWG Butzbacher Weichenbau Gesellschaft mbH & Co. KG, D-35510 Butzbach (DE)
(72) Erfinder: KAIS, Alfred, D-35423 Lich (DE); RATZ, Gerhard, D-35428 Langgöns (DE); KUNITZ, Walter, D-13745 Wildau (DE)
(74) Vertreter: Stoffregen, Hans-Herbert, Dr. Dipl.-Phys.
(86) Internationale Anmeldenummer: EP9702614
(87) Internationale Veröffentlichungsnummer: WO9745562

(56) Entgegenhaltungen:
- EP-A- 0 088 746
- EP-A- 0 467 881
- EP-A- 0 507 762
- EP-A- 0 602 729
- DE-A- 4 442 415
- FR-A- 1 533 739
- FR-A- 2 700 344

## Beschreibung

Die Erfindung bezieht sich auf ein Verfahren zur Herstellung eines Gleisoberbauteils, insbesondere eines Weichengroßteils, wobei Gleisteile wie Herzstückspitze und Anschlußschiene aus einem ersten und einem zweiten Material unterschiedlicher Zusammensetzung bestehen.

Ferner bezieht sich die Erfindung auf ein Gleisoberbauteil, insbesondere Weichengroßteil, bestehend aus durch Verschweißen verbundenen Gleisteilen unterschiedlicher Materialien, von denen ein Material ein Kohlenstoffstahl und ein anderes Material Manganhartstahl ist.

Aus der DE-AS 1 284 439 ist ein Herzstück mit blockartiger Herzstückspitze bekannt, wobei das Spitzenteil aus naturhartem Stahl und die Anschlußschienen aus üblicher Schienenqualität bestehen. Spitzenteil und Anschlußschienen werden nach dem Verschweißen ölvergütet.

Auch ist es bekannt, eine aus Manganhartstahl bestehende Herzstückspitze mit aus Kohlenstoffstahl bestehenden Anschlußschienen über ein Zwischenstück aus einem kohlenstoffarmen austenitischen Stahl zu verbinden. Nach Herstellung der ersten Schweißverbindung erfolgt sodann ein Diffusionsglühen. Um folglich Manganhartstahlguß mit Kohlenstoffstahl zu verbinden, wird ein aus Stahl bestehendes Zwischenstück verwendet, wobei beim Verschweißen eine vorgegebene Reihenfolge eingehalten und nach dem ersten Schweißvorgang eine Wärmebehandlung durchgeführt werden muß, ohne daß jedoch letztendlich sichergestellt ist, daß beim zweiten Schweißvorgang schädigende Beeinflussung des aus einem Sonderstahl bestehenden Zwischenstücks ausgeschlossen sind. Ferner muß das Zwischenstück eine bestimmte Länge aufweisen, um eine thermische Trennung zwischen den Schweißstellen zu erreichen.

Aus der AT 401 359 B ist ein Verfahren zur Herstellung eines Herzstückes bekannt. Dabei wird eine Herzstückspitze, bevor diese mit Anschlußschienen verschweißt wird, einer gezielten Wärmebehandlung unterworfen, um ein feinlamellares Perlitgefüge zu erzielen.

Die DD 263 482 A5 bezieht sich auf ein Verfahren zur Herstellung von Weichenherzstücken. Um die Verschleißfestigkeit des Herzstückes zu verbessern, ist vorgesehen, daß auf einen aus gut verschweißbarem Stahl bestehenden Grundkörper eine Radlauffläche durch Sprengplattieren oder Elektronenstrahlschweißen aufgebracht wird.

Die Verwendung eines austenitischen Manganstahls zur Herstellung von schweißbaren Bauteilen, insbesondere in Weichenherzstücken, wird in der DE 28 46 930 C2 beschrieben.

Aus der DE 29 52 079 A1 ist ein Verfahren zur Herstellung eines Gleisoberbauteils zu entnehmen, wobei ein Manganhartstahl über ein Nickel enthaltendes Zwischenstück mit einem niedriglegierten ferritischen Stahl durch Schweißen verbunden wird. Dabei wird zunächst die Zwischenschicht mit dem Manganhartstahl durch Abbrennstumpfschweißen verbunden, um sodann wärmebehandelt zu werden. Zur Herstellung des Gleisoberbauteils wird anschließend Schienenstahl angeschweißt.

Aus der FR 2 700 344 A1 ist es bekannt, Schienenabschnitte mittels Elektronenstrahlschweißen zu verbinden.

Der vorliegenden Erfindung liegt das Problem zugrunde, ein Verfahren zur Herstellung eines Gleisoberbauteils bzw. ein solches selbst derart weiterzubilden, daß eine Verbindung zwischen aus unterschiedlichen Materialien bestehenden Gleisteilen zur Herstellung eines Gleisoberbauteils ohne negative Beeinflussung der zu verbindenden Materialien erfolgt.

Verfahrensmäßig wird das Problem erfindungsgemäß dadurch gelöst, daß Kohlenstoffstahl als erstes Material und Manganhartstahl als zweites Material verwendet werden, der mit dem Kohlenstoffstahl unmittelbar durch Elektronenstrahlschweißen oder mittelbar über eine aus einer Nickelbasislegierung bestehenden Zwischenschicht verbunden wird, und daß die so verbundenen das Gleisoberbauteil bildenden Materialien anschließend als Einheit wärmebehandelt werden, wobei das Gleisoberbauteil auf eine Temperatur T derart erwärmt und über eine Zeit t gehalten wird, daß beim Manganhartstahl ein Lösungsglühen und beim Kohlenstoffstahl eine Austenitisierung erfolgt und schließlich das Gleisoberbauteil nach der Haltezeit t bei der Temperatur T partiell derart abgeschreckt wird, daß der Manganhartstahl in einem austenitischen Gefüge und der Kohlenstoffstahl in einem Mischgefüge mit zumindest Bainit- und Perlitanteilen vorliegt.

Erfindungsgemäß wird vorgeschlagen, die aus unterschiedlichen Materialien bestehenden Gleisteile, von denen eines aus Kohlenstoffstahl und das andere aus Manganhartstahl besteht, also einen Mangananteil von zumindest 10 Gewichts%, vorzugsweise im Bereich zwischen 10 und 20 Gewichts% aufweist, entweder unmittelbar durch Elektronenstrahlschweißverfahren oder mittelbar über eine auf Nickelbasislegierung bestehende Zwischenschicht zu verbinden, wobei anschließend das gesamte Gleisoberbauteil einer Wärmebehandlung gezielt unterzogen wird, um ein gewünschtes Gefüge zu erzielen, wodurch gewünschte Materialeigenschaften erreichbar sind.

Durch die Art der Verbindung erfolgt eine Vereinfachung gegenüber dem vorbekannten Stand der Technik, da erfindungsgemäß die Möglichkeit besteht, ein aus Manganhartstahl bestehendes Gleisteil unmittelbar mit dem aus Kohlenstoffstahl bestehenden zweiten Gleisteil zu verbinden, um sodann die so gebildete Einheit als ganzes zu behandeln. Durch die Verwendung des Elektronenstrahlschweißens ergibt sich der Vorteil der direkten Verbindung von Manganhartstahl mit Kohlenstoffstahl. Alternativ kann eine Verbindung über eine Zwischenschicht in Form einer Nickelbasislegierung vorgenommen werden.

Sofern als Zwischenstück die auf Nickel aufgebaute Legierung benutzt wird, wobei der Nickelanteil zumindest 60 Gewichts% der Legierung aufweisen sollte, ergibt sich der Vorteil, daß die Zwischenschicht sehr duktil ist und günstige mechanische Eigenschaften aufweist, ohne daß bei hohen Temperaturschwankungen, die beim Schweißen auftreten können, die Zwischenschicht negativ beeinflußt wird. Es ergeben sich somit bessere Werkstoffeigenschaften im Vergleich zu dem nach dem Stand der Technik benutzten Sonderstahl als Zwischenschicht, insbesondere einem austenitischen Stahl, dessen Eigenschaften bekanntlich stark temperaturabhängig sind.

Insbesondere sollte das Zwischenstück 70 bis 90 Gewichts% Ni, vorzugsweise 75 bis 80 Gewichts% Ni enthalten. Besonders günstige Materialeigenschaften ergeben sich dann, wenn das Zwischenstück < 0,05 Gewichts% C, in etwa 1 Gewichts% Mn. gegebenenfalls 5 bis 15 Gewichts% Cr und < 8 Gewichts% Fe enthält.

Um auf einfache Weise ein Zwischenstück mit den unterschiedlichen Materialien zu verschweißen, ist vorgesehen, daß das Zwischenstück mit dem einen Material durch Auftragsschweißung oder Abbrennstumpfschweißung und danach mit dem anderen Material durch Abbrennstumpfschweißung verbunden wird.

Unabhängig von der Art des Auftragens sollte die Zwischenschicht eine Länge von in etwa 3 bis 15 mm aufweisen.

In Weiterbildung der Erfindung ist vorgesehen. daß das Gleisoberbauteil nach dem Zusammenschweißen auf 890° C ≤ T ≤ 1.030° C, insbesondere auf 900° C ≤ T ≤ 980° C erwärmt wird. Ferner sollte das Gleisoberbauteil über einen Zeitraum t mit 0.5h ≤ t ≤ 5h. vorzugsweise 1h ≤ t < 4h bei der Temperatur T gehalten werden.

Um ein gewünschtes Gefüge in den unterschiedlichen Materialien auszubilden, sollte das Gleisoberbauteil in einem polymerstabilisierten Bad abgeschreckt werden Dabei kann eine partielle Abschreckung derart erfolgen, daß der Kohlenstoffstahl einen Bainitanteil von 25 % bis 50 %, vorzugsweise 30 % bis 40 %. einen Perlitanteil von zumindest 40 %, vorzugsweise zumindest 50 % sowie Martensit enthält.

Der im austenitischen Gefüge vorliegende Manganhartstahl sollte anschließend durch quasistatische oder dynamische Krafteinleitung plastisch verformt werden. Dies kann in gewohnter Weise durch Hammerwerke, Explosionsverdichtung oder durch Beschuß mit Stahlkugeln erfolgen.

Nach der plastischen Verformung des aus Manganhartstahl bestehenden Gleisteils kann das gesamte Gleisoberbauteil einer weiteren Wärmebehandlung derart unterzogen werden, daß beim Kohlenstoffstahl ein Anlassen der Martensit- und Bainitgefügeanteile und bei Manganhartstahl ein Diffusionsglühen mit Ausscheidungshärtung erfolgt.

Ein Gleisoberbauteil, insbesondere Weichengroßteil, bestehend aus durch Verschweißen verbundenen Gleisteilen unterschiedlicher Materialien, von denen ein Material ein Kohlenstoffstahl und ein anderes Material Manganhartstahl ist, wobei das Gleisoberbauteil als ganzes einer Wärmebehandlung unterzogen ist, zeichnet sich dadurch aus, daß das Gleisoberbauteil aus durch Elektronenstrahlschweißen unmittelbar oder über eine auf Nickelbasislegierung bestehende Zwischenschicht verbundenen Gleisteilen besteht, von denen der Kohlenstoffstahl in einem Mischgefüge umfassend zumindest Bainit mit einem Anteil B₁, Perlit mit einem Anteil P₁ und Martensit mit einem Anteil M₁ mit B₁ + P₁ >> M₁ vorliegt, wobei der Bainitanteil B₁ 25 % bis 50 % und der Perlitanteil P₁ größer als 40 % bezogen auf das Gesamtvolumen des Kohlenstoffstahls beträgt, und daß der Manganhartstahl plastisch verformt ist und mit austenitischem Gefüge vorliegt. Ein entsprechendes Gleisoberbauteil zeichnet sich insbesondere durch eine hohe Festigkeit und Streckgrenze aus.

Insbesondere ist vorgesehen, daß der Bainitanteil B₁ 30 bis 40 % und der Perlitanteil P₁ zumindest 50 % beträgt, bezogen auf das Gesamtvolumen des Kohlenstoffstahls.

Ferner sollte die Wärmebehandlung derart erfolgen, daß der Perlit feinlamellar vorliegt.

Als Kohlenstoffstahl ist insbesondere ein solcher einer Richtanalyse gemäß Güte 900 A oder S 1100 zu wählen.

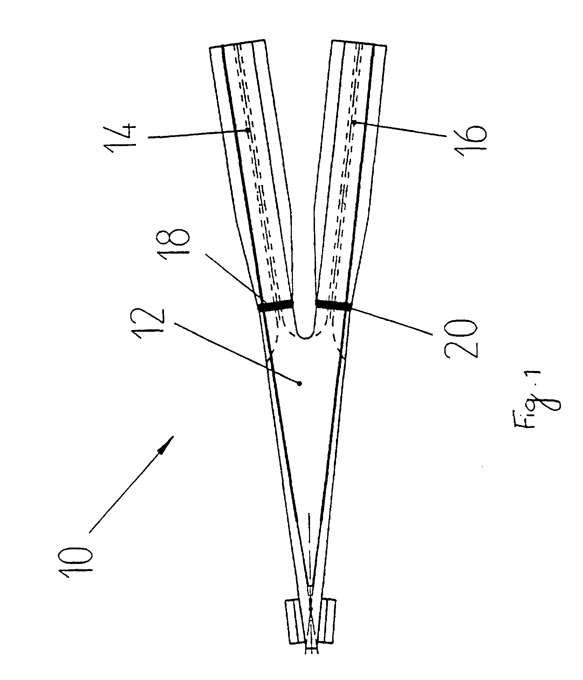

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

In der einzigen Figur ist ein Ausschnitt eines Weichenteils im Bereich eines Herzstücks 10 dargestellt. das eine Herzstückspitze 12 sowie mit dieser zu verbindende Anschlußschienen 14 und 16 umfaßt.

Die hohen Belastungen ausgesetzte Herzstückspitze 12 kann aus Manganhartstahl mit einem Mangangehalt von in etwa 10 bis 20 Gewichts% bestehen. Für die Anschlußschienen 14, 16 kann in gewohnter Weise Kohlenstoffstahl verwendet werden, z. B. einer Richtanalyse der Güte 900 A gemäß UIC-Bedingungen bzw. S 1100 gemäß Bedingungen der BWG Butzbacher Weichenbau GmbH.

Erfindungsgemäß ist nun vorgesehen, daß ungeachtet der unterschiedlichen Materialien von Herzstückspitze 12 aus Manganhartstahl und Anschlußschiene 14, 16 aus Kohlenstoffstahl entweder ein unmittelbares Verschweißen durch Elektronenstrahlschweißen erfolgt oder aber die Gleisteile 12, 14, 16 über ein Zwischenstück 18, 20 verschweißt werden, das auf einer Nickelbasislegierung aufgebaut ist, die folgende Analyse (in Gewichts%) aufweisen kann:
- Ni:: 75 bis 90 %
- C:: < 0,05 %
- Mn:: in etwa 1 %
- gegebenenfalls Cr:: 5 bis 15 %
- Fe:: < 8 %

Gegebenenfalls können definierte Anteile von Fe, Ti, S, Mo. Al, Co, Cu, Mb, V, W, Pb, As und/oder B vorhanden sein.

Durch die Verwendung einer Nickelbasislegierung als Zwischenstück 18, 20 ist der Vorteil gegeben, daß ein Material zum Einsatz gelangt, das sehr duktil ist und günstige mechanische Eigenschaften aufweist, wobei auch hohe Temperaturschwankungen, die beim Verschweißen mit der Herzstückspitze 12 bzw. den Anschlußschienen 14, 16 auftreten können, zu keinen schädigenden Beeinflussungen führen.

Die Nickelbasisiegierung kann durch Auftragsschweißung oder Abbrennstumpfschweißen zunächst mit einem der Gleisteile, also entweder mit der Anschlußschiene 14, 16 oder der Herzstückspitze 12 verschweißt werden. Beim Abbrennstumpfschweißen sollte eine Kompaktelektrode verwendet werden, dessen Querschnittsgeometrie der des Anschlußteils, also entweder der Schiene 14, 16 oder der Herzstückspitze 12 im Anschlußbereich entspricht.

Die Nickelbasislegierung sollte eine Schichtlänge von 3 bis 15 mm aufweisen. Die so ausgebildete Zwischenschicht 18, 20 wird sodann mit dem anderen Gleisteil, also mit der Herzstückspitze 12 oder den Anschlußschienen 14, 16 ebenfalls durch Schweißen, insbesondere durch Widerstandsstumpfschweißen verbunden.

Alternativ besteht die Möglichkeit, die Gleisteile, also die Herzstückspitze 12 unmittelbar mit den Anschlußschienen 14, 16 durch Elektronenstrahlschweißen zu verbinden.

Nach dem Verbinden der Gleisteile untereinander, sei es durch Elektronenstrahlschweißen, sei es mittels der Zwischenschicht 18, 20, wird das vollständige Gleisoberbauteil 10 einer gemeinsamen Wärmebehandlung derart unterzogen, daß dieses auf eine Temperatur T mit 900° C ≤ T ≤ 980° C erwärmt und bei dieser Temperatur über eine Zeit t mit 1 h ≤ t ≤ 4 Stunden gehalten wird. Sodann erfolgt vorzugsweise in einem polymerstabilisiertem Bad eine partielle Abschreckung derart, daß der Kohlenstoffstahl, also im Ausführungsbeispiel die Anschlußschienen 14, 16 einen Bainitanteil von ca. 30 bis 40 %, einen Perlitanteil von zumindest 50 % und des weiteren als Rest Martensit enthält, wobei das Perlit feinlamellar vorliegen sollte.

Anschließend kann der Manganhartstahl plastisch durch quasistatische oder dynamische Krafteinleitung verformt werden, wobei bekannte Techniken wie Explosionsverdichtung, Hammerschlagen oder Beschießen mit Stahlkugeln als Maßnahmen zur Krafteinleitung denkbar sind.

Schließlich kann das gesamte Bauteil einer weiteren Wärmebehandlung unterzogen werden, um für den Kohlenstoffstahl ein Anlassen der Martensit- und Bainitgefügeanteile und beim Manganhartstahl ein Diffusionsglühen mit Ausscheidungshärtung durch feindisperse Zementitanteile zu erreichen.

## Patentansprüche

1. Verfahren zur Herstellung eines Gleisoberbauteils, insbesondere eines Weichengroßteils, umfassend Gleisteile, wie Herzstückspitze und Anschlußschienen, die aus einem ersten und einem zweiten Material unterschiedlicher Zusammensetzung bestehen, wobei
- ein Kohlenstoffstahl als erstes Material und Manganhartstahl als zweites Material verwendet werden,
- der Manganhartstahl mit dem Kohlenstoffstahl unmittelbar durch Elektronenstrahlschweißen oder mittelbar über eine aus einer Nickelbasislegierung bestehenden Zwischenschicht verbunden wird,
- die so verbundenen das Gleisoberbauteil bildenden Materialien anschließend als Einheit wärmebehandelt werden, wobei das Gleisoberbauteil auf eine Temperatur T derart erwärmt und über eine Zeit t gehalten werden, dass beim Manganhartstahl ein Lösungsglühen und beim Kohlenstoffstahl eine Austenitisierung erfolgt, und schließlich das Gleisoberbauteil nach der Haltezeit t mit der Temperatur T partiell derart abgeschreckt wird, dass der Manganhartstahl im austenitischen Gefüge und der Kohlenstoffstahl in einem Mischgefüge mit zumindest Bainit- und Perlitanteilen vorliegt.

2. Verfahren nach Anspruch 1,
**dadurch gekennzeichnet,**
**daß** das Gleisoberbauteil nach dem Zusammenschweißen auf 890° C ≤ T ≤ 1.030° C, vorzugsweise auf 900° C ≤ T ≤ 980° C erwärmt wird.

3. Verfahren nach Anspruch 1,
**dadurch gekennzeichnet,**
**daß** das Gleisoberbauteil über eine Zeit t mit 0,5h ≤ t ≤ 5h, vorzugsweise 1h ≤ t ≤ 4h bei der Temperatur T gehalten wird.

4. Verfahren nach zumindest einem der vorhergehenden Ansprüche,
**dadurch gekennzeichnet,**
**daß** das Gleisoberbauteil in einem vorzugsweise polymerstabilisierten Bad abgeschreckt wird.

5. Verfahren nach zumindest einem der vorhergehenden Ansprüche,
**dadurch gekennzeichnet,**
**daß** das Gleisoberbauteil partiell derart abgeschreckt wird, daß der Kohlenstoffstahl einen Bainitanteil von 25 % bis 50 %, vorzugsweise 30 %bis 40 %, einen Perlitanteil von zumindest 40 %, vorzugsweise zumindest 50 % sowie Martensit enthält.

6. Verfahren nach zumindest einem der vorhergehenden Ansprüche,
**dadurch gekennzeichnet,**
**daß** der im austenitischen Gefüge vorliegende Manganhartstahl durch quasi statische oder dynamische Krafteinleitung plastisch verformt wird.

7. Verfahren nach zumindest einem der vorhergehenden Ansprüche,
**dadurch gekennzeichnet,**
**daß** nach der plastischen Verformung des aus Manganhartstahl bestehenden Gleisteils das Gleisoberbauteil einer weiteren Wärmebehandlung derart unterzogen wird, daß beim Kohlenstoffstahl ein Anlassen der Martensit- und Bainitgefügeanteile und beim Manganhartstahl ein Diffusionsglühen mit Ausscheidungshärtung erfolgt.

8. Gleisoberbauteil (10), insbesondere Weichengroßteil, bestehend aus durch Verschweißen verbundenen Gleisteilen (12, 14, 16), von denen eines ein Kohlenstoffstahl und ein anderes Material Manganhartstahl ist,
**dadurch gekennzeichnet,**
**daß** das Gleisoberbauteil (10) aus durch Elektronenstrahlschweißen unmittelbar oder über eine aus einer Nickelbasislegierung bestehende Zwischenschicht (18, 20) verbundenen Gleisteilen (12, 14, 16) besteht, von denen der Kohlenstoffstahl in einem Mischgefüge umfassend zumindest Bainit mit einem Anteil B₁, Perlit mit einem Anteil P₁ und Martensit mit einem Anteil M₁ mit B₁ + P₁ >> M₁ vorliegt, wobei der Bainitanteil B₁ 25 % bis 50 % und der Perlitanteil P₁ größer als 50 % bezogen auf das Gesamtvolumen des Kohlenstoffstahls beträgt, und
**daß** der Manganhartstahl plastisch verformt ist und mit austenitischem Gefüge vorliegt.

9. Gleisoberbauteil nach Anspruch 8,
**dadurch gekennzeichnet,**
**daß** der Bainitanteil B₁ 30 % bis 40 % und der Perlitanteil P₁ größer als 50 % beträgt.

10. Gleisoberbauteil nach Anspruch 8 oder 9,
**dadurch gekennzeichnet,**
**daß** der Perlit feinlamellar vorliegt.

11. Gleisoberbauteil nach zumindest Anspruch 8,
**dadurch gekennzeichnet,**
**daß** der Kohlenstoffstahl eine Richtanalyse gemäß Güte 900 A oder S 1100 aufweist.

## Claims

1. A process for manufacture of a superstructure part, in particular of a greater part of a points comprising rail parts such as frog point and connector rails, comprising a first and a second material of differing composition. wherein
- a carbon steel is used as the first material and manganese high-tensile steel as the second material,
- the manganese high-tensile steel is joined to the carbon steel directly by electron-beam welding or indirectly via an intermediate layer comprising a nickel-based alloy,
- the materials thus joined forming the superstructure part are then heat-treated as a unit, wherein the superstructure part is heated to a temperature T and held there at over a time t such that for manganese high-tensile steel solution annealing takes place and for carbon steel austenitizing, and finally the superstructure part is partially quenched after the holding time t at temperature T such that the manganese high-tensile steel is provided in an austenitic structure and the carbon steel is in a mixing structure with at least bainite and pearlite contents.

2. A process according to Claim 1,
**wherein**
after welding together the superstructure part is heated to 890° C ≤ T < 1030° C. preferably to 900° C ≤ T ≤ 980° C.

3. A process according to Claim 1,
**wherein**
the superstructure part is held over a time t of 0,5 h ≤ t ≤ 5 h, preferably 1 h ≤ t ≤ 4 h, at the temperature T.

4. A process according to at least one of the preceding claims,
**wherein**
the superstructure part is quenched in a preferably polymer-stabilised bath.

5. A process according to at least one of the preceding claims,
**wherein**
the superstructure part is partially quenched such that the carbon steel has a bainite content of 25 % to 50 %, preferably 30 % to 40 %, a pearlite content of at least 40 %. preferably at least 50 %. and contents martensite.

6. A process according to at least one of the preceding claims,
**wherein**
the manganese high-tensile steel present in the austenitic structure is then plastically formed by introducing a quasi-static or dynamic force.

7. A process according to at least one of the preceding claims,
**wherein**
after plastic deformation of the rail part comprising manganese high-tensile steel the superstructure part is subjected to a further heat treatment such that in the carbon steel the martensite and bainite structure contents are tempered and in manganese high-tensile steel homogenizing anneal with precipitation hardening takes place.

8. A superstructure part (10); in particular a greater part of a points, comprising rail parts (12, 14, 16) joined by welding, of which one is a carbon steel and another material is manganese high-tensile steel,
**wherein**
the superstructure part (10) comprises rail parts (12, 14, 16) joined directly by electron-beam welding or via an intermediate layer (18, 20) of nickel-based alloy, of which the carbon steel is in a mixed structure comprising at least bainite with a content B₁, pearlite with a content P₁ and martensite with a content M₁ with B₁ + P₁ » M₁, wherein the bainite content B, is 25 % to 50 % and the pearlite content P₁ is more than 50 % in respect to the total volume of the carbon steel, and wherein the manganese high-tensile steel is plastically deformed and has an austenitic structure.

9. A superstructure part according to Claim 8,
**wherein**
the bainite content B₁ is 30 % to 40 %, and the pearlite content P, is greater than 50 %.

10. A superstructure part according to Claim 8 or 9,
**wherein**
the pearlite is present in fine-lamellar form.

11. A superstructure part according at least to Claim 8,
**wherein**
the carbon steel has a guideline analysis as per grade 900 A or S 1100.

## Revendications

1. Procédé de fabrication d'une superstructure de voie ferrée notamment d'une pièce importante d'aiguillage comprenant des éléments de voie tels que la pointe de coeur et les rails de raccordement réalisés en une première et une seconde matière ayant une composition différente, selon lequel :
- on utilise un acier au carbone comme première matière et un acier austénitique au manganèse comme seconde matière,
- on relie l'acier austénitique au manganèse à l'acier au carbone, directement par soudage, par faisceau d'électrons ou indirectement avec interposition d'une couche intermédiaire constituée par un alliage à base de nickel,
- on soumet les matières constituant la superstructure de voie ferrée ainsi reliée, globalement à un traitement thermique, la superstructure étant chauffée à une température T pendant une durée (t) pour réaliser dans l'acier austénitique au manganèse un recuit d'homogénéisation et dans l'acier au carbone une austénisation, et enfin après le temps de maintien (t) à la température T, on fait une trempe partielle de la superstructure de voie ferrée pour que l'acier austénitique au manganèse se trouve dans le réseau austénitique et que l'acier au carbone soit présent sous la forme d'un réseau mélangé avec au moins des parties bainitiques et de perlite.

2. Procédé selon la revendication 1,
**caractérisé en ce qu'**
on chauffe la superstructure de voie ferrée après son assemblage par soudage à une température telle que 890°C ≤ T ≤ 1030°C, de préférence telle que 900°C ≤ T ≤ 980°C.

3. Procédé selon la revendication 1,
**caractérisé en ce qu'**
on maintient la superstructure de voie ferrée pendant la durée (t) à la température T, cette durée (t) étant telle que 0,5h ≤ t ≤ 5h et de préférence telle que 1h ≤ t ≤ 4h.

4. Procédé selon au moins l'une des revendications précédentes,
**caractérisé en ce que**
la superstructure de voie est trempée dans un bain de préférence stabilisé avec des polymères.

5. Procédé selon l'une quelconque des revendications précédentes,
**caractérisé en ce que**
la superstructure de voie ferrée est trempée partiellement de façon que l'acier au carbone comporte une partie bainitique comprise entre 25 % et 50 % et de préférence entre 30 % et 40 %, une partie en perlite d'au moins 40 % et de préférence d'au moins 50 % ainsi que de la martensite.

6. Procédé selon au moins l'une des revendications précédentes,
**caractérisé en ce que**
l'acier austénitique au manganèse dans le réseau austénitique est déformé plastiquement par induction d'une force quasi statique ou dynamique.

7. Procédé selon au moins l'une quelconque des revendications précédentes,
**caractérisé en ce qu'**
après la déformation plastique de l'élément de voie en acier austénitique au manganèse, on soumet la superstructure à un autre traitement thermique pour avoir un début de réseau martensitique ou bainitique dans l'acier au carbone et que pour l'acier austénitique au manganèse, on a un recuit de diffusion avec durcissement par précipitation.

8. Superstructure de voie ferrée (10) notamment parties de voie de grandes dimensions formées d'éléments de voie (12, 14, 16) reliés par soudage en une première matière qui est de l'acier au carbone et une seconde matière qui est de l'acier austénitique au manganèse,
**caractérisée en ce que**
la superstructure de voie (10) est obtenue par soudage ou par faisceau d'électrons, directement ou par une couche intermédiaire (18, 20) formée d'un alliage à base de nickel pour relier les éléments de voie (12, 14, 16) et la teneur en carbone du réseau mélangé comprend au moins de la bainite avec une teneur B₁, de la perlite avec une teneur P₁ et de la martensite avec une teneur M₁ telle que B₁ + P₁ > M₁,
et la teneur en bainite B₁ est comprise entre 25 % et 50 %, la teneur en perlite P₁ est supérieure à 50 % par rapport au volume total de l'acier au carbone et l'acier austénitique au manganèse est déformé plastiquement et est présent sous la forme d'un réseau austénitique.

9. Superstructure de voie ferrée selon la revendication 8,
**caractérisée en ce que**
la partie bainitique B₁ représente entre 30 % et 40 % et la partie de perlite P₁ est supérieure à 50 %.

10. Superstructure de voie ferrée selon la revendication 8 ou 9,
**caractérisée en ce que**
la perlite est à lamelles fines.

11. Superstructure de voie ferrée selon au moins la revendication 8,
**caractérisée en ce que**
la teneur en carbone correspond à une composition de qualité 900 A ou S 1100.
